# EUROPÄISCHE PATENTANMELDUNG

(11) **EP 3 087 816 A1**
(43) Veröffentlichungstag der Anmeldung: **02.11.2016**
(21) Anmeldenummer: 16167344.7
(22) Anmeldetag: 27.04.2016
(51) Int. Cl.: A01B 71/02, B60K 25/06, A01D 69/02

(54) **GENERATOREINHEIT**

(30) Priorität: 30.04.2015 DE 102015208077
(71) Anmelder: Deere & Company, Moline, IL 61265 (US)
(72) Erfinder: Böhm Dr., Barbara, 69115 Heidelberg (DE); Gugel, Rainer, 68723 Plankstadt (DE)
(74) Vertreter: Dehnhardt, Florian Christopher

(57) **Zusammenfassung**

Generatoreinheit (30) zum Anbau an ein landwirtschaftliches Arbeitsfahrzeug (10), mit einem Getriebemodul (42) und einem Generatormodul (44), wobei das Getriebe zum Antrieben des Generatormoduls (44) mit diesem antriebsverbunden ist und das Getriebemodul (42) und das Generatormodul (44) über einen integrierten Kühl- und Schmiermittelkreislauf hydraulisch miteinander verbunden sind. Eine Leistungselektronik ist vorgesehen, um einen Betrieb des Generatormoduls (44) und eines an die Generatoreneinheit (30) angeschlossenen elektrischen Leistungsverbrauchers (22) zu steuern.

## Beschreibung

Die Erfindung betrifft eine Generatoreinheit zum Anbau an ein landwirtschaftliches Arbeitsfahrzeug, mit einem Getriebemodul und einem Generatormodul, wobei das Getriebemodul zum Antrieben des Generatormoduls mit diesem antriebsverbunden ist und das Getriebemodul und das Generatormodul über einen integrierten Kühl- und Schmiermittelkreislauf hydraulisch miteinander verbunden sind.

Aufgrund vielfältiger Vorteile steht die Elektrifizierung von Anbaugeräten für landwirtschaftliche Arbeitsfahrzeuge im Fokus von gegenwärtigen Entwicklungen. Diese Entwicklung hat sich zum Ziel gesetzt, für einen Übergangszeitraum sogenannte Add-on-Generatoreinheiten zum Anbau an derzeit erhältliche Arbeitsfahrzeuge zur Verfügung zu stellen, bis in einigen Jahren nach einem nächsten Entwicklungsschritt Arbeitsfahrzeuge mit integrierten Generatoreinheiten am Markt erhältlich sein werden.

Eine solche Add-on-Generatoreinheit ist aus der DE 10 2011 055 192 A1 bekannt. Ein landwirtschaftliches Arbeitsfahrzeug mit einer Zapfwelle, beispielsweise ein Traktor, lässt sich mit der dort beschriebenen Generatoreinheit ausrüsten, so dass elektrische Leistungsverbraucher mit einer von einer Nennspannung eines Bordnetzes des Arbeitsfahrzeugs abweichenden Nennspannung betrieben werden können. Es lässt sich somit ein zusätzliches Bordnetz mit einer höheren Nennspannung aufbauen. Allerdings wird nicht beschrieben, wie eine elektrische Ansteuerung des Generators und des elektrischen Leistungsverbrauchers erfolgt.

Ausgehend hiervon besteht die Aufgabe der vorliegenden Erfindung darin eine Generatoreinheit bereitzustellen, von der ausgehend eine Ansteuerung des Generatormoduls und des elektrischen Leistungsverbrauchers erfolgen kann.

Die Aufgabe wird gelöst durch eine Generatoreinheit zum Anbau an ein landwirtschaftliches Arbeitsfahrzeug, umfassend ein Getriebemodul und ein Generatormodul, wobei das Getriebemodul zum Antrieben des Generatormoduls mit diesem antriebsverbunden ist und das Getriebemodul und das Generatormodul über einen integrierten Kühl- und Schmiermittelkreislauf hydraulisch miteinander verbunden sind, wobei eine Leistungselektronik vorgesehen ist, um einen Betrieb des Generatormoduls und eines an die Generatoreinheit angeschlossenen elektrischen Leistungsverbrauchers zu steuern.

Erst die bauliche Integration einer Leistungselektronik in die Generatoreinheit schafft eine autarke Einheit, die lediglich auf einen mechanischen Antrieb durch das landwirtschaftliche Arbeitsfahrzeug angewiesen ist. Die Generatoreinheit beinhaltet eine in sich geschlossene Architektur der Leistungselektronik. Über die Leistungselektronik kann ein Betrieb des Generatormoduls und ein Betrieb eines elektrischen Leistungsverbrauchers gesteuert werden.

Bevorzugt ist zur Kühlung der Leistungselektronik ein Kühlkreislauf vorgesehen. Insbesondere ist der Kühlkreislauf für die Leistungselektronik innerhalb beziehungsweise auf der Generatoreinheit vorgesehen. Hierbei kann es sich um einen in sich geschlossenen Kreislauf handeln.

In einer möglichen Ausgestaltung ist der Kühlkreislauf der Leistungselektronik als Wasserkreislauf ausgebildet. Sofern es sich hierbei um einen in sich geschlossenen Kreislauf handelt, kann auf eine Anbindung beispielsweise an einen Kühlkreislauf der Arbeitsmaschine verzichtet werden.

In einer möglichen alternativen Ausgestaltung ist der Kühlkreislauf als Ölkreislauf ausgebildet. In einer bevorzugten, alternativen Ausgestaltung sind der integrierten Kühl- und Schmiermittelkreislauf des Generators und des Getriebes und der Kühlkreislauf der Leistungselektronik zu einem Kreislauf zusammengefasst. Hierdurch ergibt sich die Möglichkeit für den einen Kreislauf auch nur eine Fluidpumpe oder einen Fluidkühler vorzuhalten.

Bevorzugt sind zumindest eine Schnittstelle zur Abgabe einer Wechselspannung und zumindest eine Schnittstelle zur Abgabe einer Gleichspannung an den elektrischen Leistungsverbraucher vorgesehen.

Die vorliegende Erfindung wird anhand der nachfolgenden Figuren beschrieben. Hierin zeigen:
- Figur 1: ein landwirtschaftliches Arbeitsfahrzeug mit gekoppeltem Anbaugerät und einer erfindungsgemäßen Generatoreinheit und
- Figur 2: eine erfindungsgemäße Generatoreinheit.

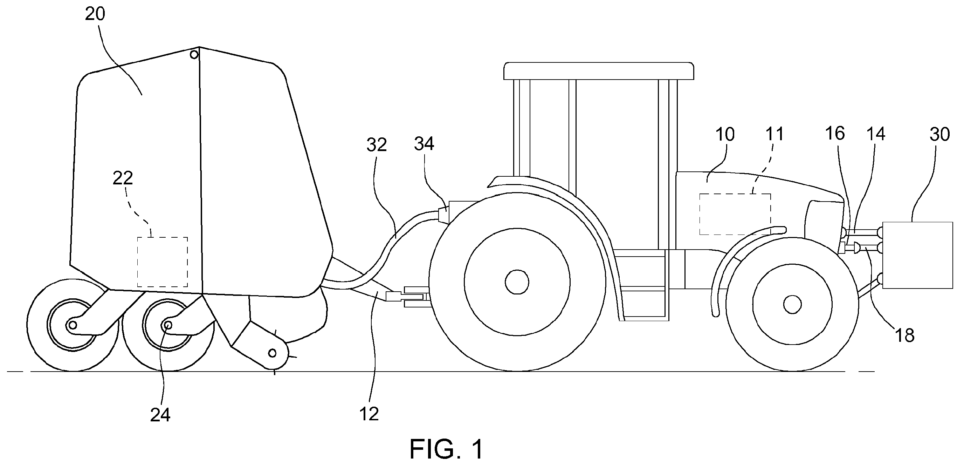

Die Figur 1 zeigt ein landwirtschaftliches Arbeitsfahrzeug 10 in Gestalt eines Traktors, das über eine gekuppelte Zugdeichsel 12 ein Anbaugerät 20 in Gestalt eines Ladewagens zieht. Das Arbeitsfahrzeug 10 ist von einer Verbrennungskraftmaschine 11 beziehungsweise einem Motor angetrieben. Über eine vordere Dreipunktaufhängung 14 ist eine Generatoreinheit 30 an das Arbeitsfahrzeug 10 angebaut. Alternativ kann die Generatoreinheit 30 auch über eine Dreipunktaufhängung an dem Heck des Arbeitsfahrzeugs angeordnet sein. Die Generatoreinheit 30 ist mit einer vorderen Zapfwelle 16 des Arbeitsfahrzeugs 10 über eine Gelenkwelle 18 antriebsverbunden. Die Generatoreinheit 30 kann mittels einer Drehung der Zapfwelle 16 angetrieben werden, um eine elektrische Leistung unabhängig von dem Bordnetz der Arbeitsmaschine 10 zu erzeugen. Das Anbaugerät 20 ist ferner über einen elektrischen Leiter 32 und eine steckbare Schnittstelle 34 mit dem Arbeitsfahrzeug 10 verbunden. Eine von der Generatoreinheit 30 erzeugte elektrische Leistung kann über nicht näher dargestellte Leitungsmittel auf dem Arbeitsfahrzeug 10 über die Schnittstelle 34 und den elektrischen Leiter 32 einem elektrischen Verbraucher 22 des Anbaugeräts 20 zur Verfügung gestellt werden. Vorliegend ist der elektrische Verbraucher 22 als elektrischer Motor zum Antrieb einer Achse 24 des Anbaugeräts 20 ausgeführt.

Es sei darauf hingewiesen, dass es sich bei dem Anbaugerät 20 auch um eine getragene Vorrichtung beispielsweise in Gestalt eines Düngerstreuers handeln kann. Auch muss mit dem elektrischen Verbraucher nicht zwingend eine Achse angetrieben werden. Auf eine Darstellung dieser Alternativen wird verzichtet.

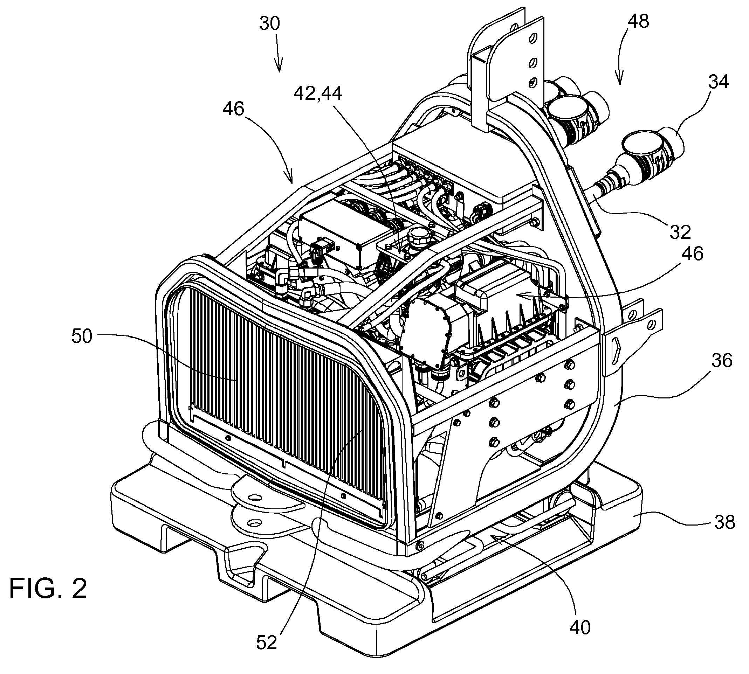

Die Figur 2 zeigt die Generatoreinheit 30 in alleiniger Darstellung. Die Generatoreinheit 30 umfasst zunächst einen Rahmen 36 zur Aufnahme verschiedener Komponenten. Der Rahmen 36 dient hierbei sowohl dem Schutz der Komponenten als auch mittelbar der Befestigung an der Dreipunktaufhängung 14 des Arbeitsfahrzeugs 10. Der Rahmen 36 kann einteilig oder mehrteilig ausgeführt sein. Weiterhin kann der Rahmen 36 zur Aufnahme eines Ballastierungsgewichts 38 dienen. Wie dargestellt, kann ein Ballastierungsgewicht 38 von unten an den Rahmen 36 mit einem nicht näher erläuterten Verriegelungsmechanismus 40 befestigt sein. An Komponenten umfasst die Generatoreinheit 30 ein Getriebemodul 42, ein Generatormodul 44, eine Leistungselektronik 46 und Kühlungskomponenten.

Das Getriebemodul 42 ist im Wesentlichen dazu ausgebildet die Zapfwellendrehzahl auf die für das Generatormodul 44 erforderliche Drehzahl zu übersetzen. In einer einfachen Ausgestaltung besitzt das Getriebemodul 42 eine feste Übersetzung und kann als Stirnradstufe ausgebildet sein. Die Leistungselektronik 46 kann einen Umrichter mit einem Gleichspannungszwischenkreis und Kontrolleinheiten für das Generatormodul 44 und für den elektrischen Verbraucher 22 des Anbaugeräts 20 umfassen. Weiterhin umfasst die Leistungselektronik 46 eine Anordnung bestehend aus Hochspannungs- und Steuerleitungsverbindungen 48. Hierbei können der Verbindungen 48 derart mit der Leistungselektronik 46 verbunden sein, dass sowohl Gleichspannung als auch Wechselspannung zur Verfügung gestellt werden kann.

Es ist ein integrierter Kühl- und Schmiermittelkreislauf für das Generatormodul 44 und das Getriebemodul 42 vorgesehen. Für diesen integrierten Kreislauf ist ein in dem vorderen Bereich der Generatoreinheit 30 umgebungsluftdurchströmter Wärmetauscher 50 angeordnet. Zusätzlich ist ein Kühlkreislauf zur Kühlung der Leistungselektronik 46 vorgesehen. Dieser Kühlkreislauf kann als Wasserkreislauf ausgebildet sein und einen weiteren umgebungsluftdurchströmtem Wärmetauscher 52 im vorderen Bereich der Generatoreinheit 30 umfassen. In einer alternativen Ausgestaltung sind sowohl der Kühl- und Schmiermittelkreislauf für das Generatormodul 44 und das Getriebemodul 42 als auch der Kühlkreislauf zur Kühlung der Leistungselektronik 46 zu einem ölbasierten Kreislauf zusammengefasst. Hierbei kann dann auf den zweiten Wärmetauscher 52 verzichtet werden.

Die erfindungsgemäße Generatoreinheit 30 ist mit dem Anbaugerät lediglich über die leicht zu verlegenden Hochspannungs- und Steuerleitungsverbindungen 48 verbunden. Die Generatoreinheit 30 ist durch den Rahmen 36 steif ausgestaltet, so dass Stoßbelastungen unmittelbar an die Dreipunktaufhängung 14 des Arbeitsfahrzeugs 10 weitergeleitet werden und Komponenten der Generatoreinheit 30 keinen Schaden nehmen. Abweichend von der hier beschriebenen Anordnung kann die Generatoreinheit auch im Heckbereich des Arbeitsfahrzeugs 10 angebracht sein. Zusätzlich kann die Generatoreinheit 30 mit einer Zugvorrichtung ausgerüstet sein, um ein Gerät zu drücken oder zu ziehen.

### Bezugszeichenliste

- 10: landwirtschaftliches Arbeitsfahrzeug
- 11: Verbrennungskraftmaschine
- 12: Zugdeichsel
- 14: Dreipunktaufhängung
- 16: Zapfwelle
- 18: Gelenkwelle
- 20: Anbaugerät
- 22: elektrischer Verbraucher
- 24: Achse
- 30: Generatoreinheit
- 32: elektrischer Leiter
- 34: Schnittstelle
- 36: Rahmen
- 38: Ballastierungsgewicht
- 40: Verriegelungsmechanismus
- 42: Getriebemodul
- 44: Generatormodul
- 46: Leistungselektronik
- 48: Leitungsverbindung
- 50: Wärmetauscher
- 52: Wärmetauscher

## Patentansprüche

1. Generatoreinheit (30) zum Anbau an ein landwirtschaftliches Arbeitsfahrzeug (10), umfassend
ein Getriebemodul (42) und ein Generatormodul (44), wobei das Getriebe zum Antrieben des Generatormoduls (44) mit diesem antriebsverbunden ist und das Getriebemodul (42) und das Generatormodul (44) über einen integrierten Kühl- und Schmiermittelkreislauf hydraulisch miteinander verbunden sind, **dadurch gekennzeichnet,**
**dass** eine Leistungselektronik (46) vorgesehen ist, um einen Betrieb des Generatormoduls (44) und eines an die Generatoreinheit (30) angeschlossenen elektrischen Leistungsverbrauchers (22) zu steuern.

2. Generatoreinheit (30) nach Anspruch 1, **dadurch gekennzeichnet, dass** zur Kühlung der Leistungselektronik (46) ein Kühlkreislauf vorgesehen ist.

3. Generatoreinheit (30) nach Anspruch 2, **dadurch gekennzeichnet, dass** der Kühlkreislauf als Wasserkreislauf ausgebildet ist.

4. Generatoreinheit (30) nach Anspruch 2, **dadurch gekennzeichnet, dass** der Kühlkreislauf als Ölkreislauf ausgebildet ist.

5. Generatoreinheit (30) nach Anspruch 4, **dadurch gekennzeichnet, dass** der integrierten Kühl- und Schmiermittelkreislauf des Generatormoduls (44) und des Getriebemoduls (42) und der Kühlkreislauf der Leistungselektronik (46) zu einem Kreislauf zusammengefasst sind.

6. Generatoreinheit (30) nach einem der Ansprüche 1 bis 5, **dadurch gekennzeichnet, dass** zumindest eine Schnittstelle zur Abgabe einer Wechselspannung und zumindest eine Schnittstelle zur Abgabe einer Gleichspannung an den elektrischen Leistungsverbraucher (22) vorgesehen sind.
